# EUROPÄISCHE PATENTSCHRIFT

(11) **EP 1 560 285 B1**
(45) Veröffentlichungstag und Bekanntmachung des Hinweises auf die Patenterteilung: **03.05.2017**
(21) Anmeldenummer: 04002188.3
(22) Anmeldetag: 30.01.2004
(51) Int. Cl.: H01M 8/04992, H01M 8/1011, H01M 8/04082, H01M 8/04186, H01M 8/0432, H01M 8/04537, H01M 8/04746

(54) **Verfahren zur Steuerung der Brennstoffzufuhr bei Brennstoffzellensystemen**
Process for controlling the fuel supply in a fuel cell system
Procédé de côntrole d'alimentation en carburant dans un système de piles à combustible

(43) Veröffentlichungstag der Anmeldung: 03.08.2005
(73) Patentinhaber: SFC Energy AG, 85649 Brunnthal (DE)
(72) Erfinder: Böhm, Christian, 85635 Höhenkirchen-Siegertsbrunn (DE); Harbusch, Volker, 81371 München (DE); Huber, Markus, 85556 Grafing (DE); Sonntag, Christoph, 85591 Vaterstetten (DE); Müller, Jens, Dr., 81827 München (DE)
(74) Vertreter: Grünecker Patent- und Rechtsanwälte PartG mbB

(56) Entgegenhaltungen:
- EP-A- 1 207 578
- EP-A- 1 256 992
- EP-A1- 1 280 218
- EP-A2- 1 321 995
- US-A- 5 991 670
- PATENT ABSTRACTS OF JAPAN Bd. 0186, Nr. 72 (E-1646), 19. Dezember 1994 (1994-12-19) & JP 6 267577 A (HITACHI LTD), 22. September 1994 (1994-09-22)
- PATENT ABSTRACTS OF JAPAN Bd. 0171, Nr. 52 (E-1340), 25. März 1993 (1993-03-25) & JP 4 319264 A (OSAKA GAS CO LTD), 10. November 1992 (1992-11-10)

## Beschreibung

Die vorliegende Erfindung betrifft Verfahren zur Steuerung der Brennstoffzufuhr bei Brennstoffzellensystemen, speziell die Zudosierung von Brennstoff in ein anodenseitiges Brennstoffgemisch.

Bei der direkten Verstromung eines Brennstoffs in einem Brennstoffzellensystem ist es aus mehreren Gründen erforderlich, dass der Brennstoff im anodenseitigen Brennstoffgemisch (Anodenfluid) nicht in reiner Form, sondern verdünnt, in der Regel in Wasser, vorliegt.

Dies verlangen zum einen die Bilanzgleichungen für den jeweiligen Brennstoff. Beispielsweise lässt sich für die Anodenreaktion einer alkalischen Brennstoffzelle, die Methanol als Brennstoff verwendet, folgende Reaktionsgleichung angeben:

CH₃OH + H₂O → CO₂ + 6H⁺ + 6e⁻

Diese Oxidation von Methanol zu Kohlendioxid erfordert also zwingend die Anwesenheit von Wasser im Anodenkreislauf, wobei vom Standpunkt der Reaktionsstöchiometrie aus betrachtet wenigstens ein 1-zu-1-Verhältnis von Wasser zu Methanol erforderlich ist.

Zum anderen gibt es auch technologische Aspekte, die eine Verdünnung des Brennstoffs erfordern. So können, zurückgreifend auf obiges Beispiel, in der Praxis bei der direkten Verstromung von Methanol nur stark verdünnte Methanol-Wasser-Gemische verwendet werden. Dies hat die folgenden Ursachen: es ist bislang kein Elektrolytmaterial bekannt, dass mit einem 1-zu-1-Gemisch von Methanol zu Wasser zuverlässig betrieben werden könnte. Bei einer derartigen hohen Konzentration an Methanol beeinträchtigt der sog. Methanol-Durchbruch, d.h. das Diffundieren von Methanolmolekülen zur Kathodenseite, die Funktionsweise der Zelle, was zu einer extremem Reduzierung des Wirkungsgrades führt.

Somit verlangen die Transporteigenschaften bekannter Elektrolytmaterialien eine starke Verdünnung des Brennstoffs. Bei einer Direkt-Methanol-Brennstoffzelle (DMFC) etwa liegt die optimale Methanolkonzentration im Bereich von etwa 0,2 bis 2 mol/l, was einem Anteil von nur etwa 0,65 bis 6,5 Gew. % von Methanol in Wasser entspricht.

Da beim Strömen eines derartigen Brennstoffgemisches durch eine Brennstoffzelle nur ein Teil des Brennstoffes umgesetzt wird, wird das nur teilweise abgereicherte auslassseitige Brennstoffgemisch in einer Kreislaufströmung wieder zum Einlass zurückgeführt, um so eine möglichst vollständige Verwertung des Brennstoffes zu erreichen. Zur Kompensation des umgesetzten Brennstoffs muss dieser Kreislaufströmung ständig Brennstoff zugeführt werden. Dabei muss die Zufuhr präzise gesteuert werden, da nicht nur ein Brennstoffunterschuss im Brennstoffgemisch zu einer drastischen Herabsetzung des Wirkungsgrads (bis hin zur Funktionsunfähigkeit) der Brennstoffzelle führt, sondern ebenso ein Brennstoffüberschuss.

Beispielsweise muss bei einer Direkt-Methanol-Brennstoffzelle (DMFC) Methanol so zugeführt werden, dass die Methanolkonzentration des Brennstoffgemischs, das der Brennstoffzelle anodenseitig zugeführt wird, in einem - von diversen Betriebszuständen und Systemparametern abhängigen - optimalen Bereich bleibt.

Die naheliegende Art und Weise zur Aufrechterhaltung der Methanolkonzentration wird beispielsweise in der WO02/49132 beschrieben. Dort wird vorgeschlagen, mit Hilfe eines Methanolsensors die Methanolkonzentration im Anodenfluid regelmäßig oder ständig zu messen und die Methanolzufuhr in den Anodenkreislauf durch Vergleich des so ermittelten Ist-Werts der Methanolkonzentration mit einem vorbestimmten Soll-Wert zu regeln.

Dieses Verfahren hat aber den Nachteil, dass Methanol und Wasser in ihren chemischen-physikalischen Eigenschaften sehr ähnlich sind. Eine exakte Messung der Methanolkonzentration im praktisch relevanten Verdünnungsbereich ist daher sehr aufwändig und ein exakt messender und dabei kompakter und kostengünstiger Methanolsensor zur Zeit nicht verfügbar.

Die EP1321995 schlägt ein Verfahren vor, bei dem die Methanolkonzentration nicht direkt gemessen wird, sondern indirekt: sie wird mittels empirischer Modelle aus gemessenen Systemparametern berechnet. Diese Systemparameter sind der Brennstoffzellenstrom I, die Temperatur T_{F} des Anodenfluids außerhalb des Brennstoffzellenstacks und die Temperatur T_{S} des Brennstoffzellenstacks. Die Methanolzufuhr in den Anodenkreislauf wird dann durch Vergleich des berechneten Ist-Werts der Methanolkonzentration mit einem vorbestimmten Soll-Wert geregelt.

Dieses Verfahren erfordert aber zum einen zwei Temperatursensoren, was zu erhöhten Kosten und erhöhter Systemkomplexität führt, zum anderen ist die ständig erforderliche Berechnung der Konzentration auf Grundlage dreier Messgrößen aufwändig und bedarf einer komplexen Hard- und Software, welche ebenfalls zu einer Kostenerhöhung führen.

Die obigen Beispiele betrafen speziell DMFC-Systeme. Ähnliche Probleme treten aber auch bei anderen Typen von Brennstoffzellensystemen auf. Zusammenfassend lässt sich somit allgemein festhalten: Beim Betreiben eines Brennstoffzellensystems ist es unabhängig von der Art des verwendeten Brennstoffs und des Brennstoffzellensystems erforderlich, die Konzentration des Brennstoffs im Anodenfluid innerhalb enger Toleranzgrenzen einzustellen und zu halten.

Das direkte oder indirekte Messen der Brennstoffkonzentration ist aber vielfach mit hohem Aufwand verbunden und/oder kann nur mit eingeschränkter Genauigkeit durchgeführt werden.

Es ist eine Aufgabe der vorliegenden Erfindung, ein vereinfachtes Verfahren der Steuerung der Zufuhr von Brennstoff in das anodenseitige Brennstoffgemisch eines Brennstoffzellensystems bereitzustellen.

Diese Aufgabe wird durch das erfindungsgemäße Verfahren gemäß Anspruch 1 gelöst.

Vorteilhafte Weiterbildungen des erfindungsgemäßen Verfahrens sind in den Unteransprüchen angegeben.

Ein erstes, besonders einfaches, beispielhaftes Verfahren zur Steuerung der Brennstoffzufuhr in ein Brennstoffzellensystem mit einem Brennstoffzellenstack umfasst die folgenden Schritte: Ermitteln eines Eingangswertes durch Messen einer Kenngröße, die für den durch den Brennstoffzellenstack erzeugten elektrischen Strom repräsentativ ist; Ermitteln eines Brennstoffzufuhrstellwerts in Abhängigkeit von dem ermittelten Eingangswert; und Zuführen von Brennstoff entsprechend dem ermittelten Brennstoffzufuhrstellwert.

Gemäß diesem Verfahren wird während des Betreibens des Brennstoffzellensystems der elektrische Strom, der durch den Brennstoffzellenstack erzeugt wird, bzw. eine Messgröße, die mit diesem elektrischen Strom in eindeutiger und bekannter Beziehung steht, gemessen. Für das System wurde bereits vorab ermittelt, bei welchen Stromwerten welche Menge an Brennstoff zudosiert werden muss, damit das System im optimalen Wirkungsbereich bleibt. Auf Grundlage dieser Stromwerte und der zugehörigen Mengen an zuzudosierendem Brennstoff wird eine Tabelle (Look-Up Table) oder ein funktionaler Zusammenhang zwischen Stromwerten und Brennstoffzudosierung erstellt, so dass jedem Stromwert ein Brennstoffzufuhrstellwert zugeordnet ist, der zur Einstellung der erforderlichen Brennstoffzudosierung dient, beispielsweise durch Ansteuerung einer Förderpumpe. Die Tabelle oder der funktionale Zusammenhang können in elektronischer Form in einem Speicher, auf den die Systemsteuerung Zugriff hat, abgelegt werden. Somit kann allein auf Grundlage des ermittelten Eingangswerts, d.h. in Abhängigkeit von einem einzigen Eingangswert, ein Brennstoffzufuhrstellwert ermittelt (ausgelesen bzw. berechnet) werden und die Brennstoffzufuhr entsprechend dem ermittelten Brennstoffzufuhrstellwert dosiert werden.

Im Unterschied zu bekannten Verfahren ist beim erfindungsgemäßen Verfahren die Kenntnis der tatsächlich anodenseitig vorliegenden Brennstoffkonzentrationen weder erforderlich noch hilfreich. Daher muss die Brennstoffkonzentration weder direkt gemessen, noch aus anderen Messgrößen berechnet (indirekt gemessen) werden. Durch den Wegfall der Notwendigkeit, die Brennstoffkonzentration direkt oder indirekt zu messen, wird durch das erfindungsgemäße Verfahren eine beträchtliche Vereinfachung der Steuerung der Brennstoffzufuhr erreicht.

Im Allgemeinen kann gemäß diesem Verfahren der Brennstoffzufuhrstellwert in Abhängigkeit vom ermittelten Eingangswert und weiterer Parameter, die mit der Kenngröße zusammenhängen, beispielsweise deren zeitliche Entwicklung (Zunahme oder Abnahme), ermittelt werden.

In einer besonders bevorzugten Weiterbildung ist der Brennstoffzufuhrstellwert aber nur von dem einen (einzigen) Eingangswert abhängig, d.h. der Brennstoffzufuhrstellwert hängt von keinen weiteren Messgrößen ab, so dass die Zufuhr anhand einer einzigen Messgröße, also z.B. einem einzigen Stromwert, gesteuert werden kann.

In einer anderen Weiterbildung umfasst das erfindungsgemäße Verfahren zur Steuerung der Brennstoffzufuhr in ein Brennstoffzellensystem mit einem Brennstoffzellenstack die folgenden weiteren Schritte: Ermitteln eines zweiten Eingangswertes durch Messen einer zweiten Kenngröße des Brennstoffzellensystems; Ermitteln eines Brennstoffzufuhrstellwerts in Abhängigkeit von den beiden ermittelten Eingangswerten; und Zuführen von Brennstoff entsprechend dem ermittelten Brennstoffzufuhrstellwert.

Gemäß diesem Verfahren werden während des Betriebs zwei Kenngrößen gemessen: zum einen wiederum der elektrische Strom bzw. eine Messgröße, die mit diesem elektrischen Strom in eindeutiger und bekannter Beziehung steht, zum anderen eine zweite Messgröße, beispielsweise eine Temperatur an einer vorgegebenen Position des Brennstoffzellensystems. Für eine umfassende Anzahl von Wertepaaren dieser beiden Messgrößen wurde bereits vorab ermittelt, welche Menge an Brennstoff jeweils zudosiert werden muss, damit das System im optimalen Wirkungsbereich bleibt.

Auf Grundlage dieser Wertepaare und der zugehörigen Mengen an zuzudosierendem Brennstoff wird auch hier wiederum eine Tabelle (Look-Up Table) oder ein funktionaler Zusammenhang zwischen den beiden Kenngrößen und der Brennstoffzudosierung erstellt, so dass jedem Wertepaar ein Brennstoffzufuhrstellwert zugeordnet ist, der zur Einstellung der erforderlichen Brennstoffzudosierung dient, beispielsweise durch Ansteuerung einer Förderpumpe. Die Tabelle oder der funktionale Zusammenhang können in elektronischer Form in einem Speicher, auf den die Systemsteuerung Zugriff hat, abgelegt werden. Somit kann in Abhängigkeit von den beiden ermittelten Eingangswerten direkt ein Brennstoffzufuhrstellwert ermittelt (ausgelesen bzw. berechnet) werden und die Brennstoffzufuhr entsprechend dem ermittelten Brennstoffzufuhrstellwert dosiert werden.

Dabei ist keine Kenntnis der tatsächlich anodenseitig vorliegenden Brennstoffkonzentrationen nötig, so dass eine beträchtliche Vereinfachung der Steuerung der Brennstoffzufuhr erreicht wird.

Die zweite Kenngröße (i.d.R. Temperatur) hat im Allgemeinen auf den Brennstoffzufuhrstellwert einen deutlich geringeren Einfluss als der Strom oder die den Strom repräsentierende erste Kenngröße, und kann daher als Korrektur betrachtet werden. Im Vergleich mit dem einfacheren Verfahren gemäß Anspruch 1 kann somit durch die Verwendung einer zweiten Kenngröße eine noch präzisere Optimierung des Wirkungsgrades erreicht werden.

Die zweite Kenngröße des Brennstoffzellensystems ist eine Größe, die für die Temperatur des Brennstoffzellenstacks (Stacktemperatur) des Brennstoffzellensystems repräsentativ ist.

Alternativ dazu ist die zweite Kenngröße des Brennstoffzellensystems eine Größe, die für die Temperatur des Anodenfluids des Brennstoffzellensystems repräsentativ ist. Diese Temperatur kann auch außerhalb des Brennstoffzellenstacks im Anodenkreislauf gemessen werden. Besonders geeignet zur Temperaturmessung sind Positionen direkt am Auslass des Brennstoffzellenstacks oder direkt am Einlass zum Brennstoffzellenstack.

Das oben beschriebenen Verfahren eignen sich in der beschriebenen Art und Weise sehr gut für ein bereits laufendes System. Bei einem System, das des öfteren ausgeschaltet wird, kann es aber aufgrund von Verdunstung zu einer Abreicherung von Brennstoff in Anodenfluid kommen. In diesem Fall ist es bei einem Systemstart vorteilhaft, wenn einmalig oder über eine vorbestimmte Zeitdauer zusätzlich eine höhere Brennstoffmenge zugeführt wird. Daher wird beim erfindungsgemäßen Verfahren gemäß Alternative (i) vor dem Ermitteln des Eingangswerts bzw. der Eingangswerte überprüft, ob eine Standzeit des Brennstoffzellenstacks vorliegt, und wenn dies der Fall ist, ein Standzeitkorrekturwert in Abhängigkeit von der ermittelten Standzeit ermittelt und der Brennstoffzufuhrstellwert in Abhängigkeit von dem ermitteltem Eingangswert bzw. den ermittelten Eingangswerten und dem ermitteltem Standzeitkorrekturwert ermittelt.

Ähnliches wird gemäß Alternative (ii) für den Fall implementiert, dass es bei einem Tankwechsel zu einer kurzfristigen Unterbrechung der Brennstoffzufuhr und dementsprechend zu einer erhöhten Abreicherung im Anodenfluid kommt. Auch in diesem Fall wird nach erfolgtem Tankwechsel, abhängig von der zufuhrlosen Zeitspanne, ein Brennstoffzufuhrstellwert ermittelt und eine Brennstoffzufuhr gemäß dem ermittelten Brennstoffzufuhrstellwert durchgeführt.

Ein weiteres, beispielhaftes Verfahren zur Steuerung der Brennstoffzufuhr in ein Brennstoffzellensystem mit einem Brennstoffzellenstack umfasst die folgenden Schritte: Ermitteln eines Eingangswertes durch Bestimmen eines Strombedarfs, Ermitteln eines Brennstoffzufuhrstellwerts in Abhängigkeit von dem ermittelten Eingangswert, und Zuführen von Brennstoff entsprechend dem ermittelten Brennstoffzufuhrstellwert.

Bei diesem Verfahren wird der Strombedarf festgelegt, so dass auch eine Messung des Stroms nicht erforderlich ist. Hierfür muss das System so ausgelegt werden, dass es nur einen eingeschränkten Lastbereich gibt, in dem eine voreingestellte Zudosierung vorgenommen wird. Im Grenzfall kann das System für einen einzigen Lastpunkt konfiguriert werden, wobei die für diesen Lastpunkt erforderliche Brennstoffmenge zugeführt wird, und bei einem Abweichen von diesem Lastpunkt das System in einen Stand-by Modus übergeht.

Das erfindungsgemäße Verfahren kann auf vielfältigste Weise erweitert und ergänzt werden. Insbesondere können Hysterese-Effekte berücksichtigt werden, indem ein Brennstoffzufuhrstellwert nicht nur in Abhängigkeit von dem aktuell ermittelten Eingangswert ermittelt wird, sondern auch unter Berücksichtigung seiner zeitlichen Entwicklung, z.B. indem auch der unmittelbar zuvor ermittelte Eingangswert berücksichtigt wird. So können für ein und denselben Stromwert unterschiedliche Brennstoffzufuhrstellwerte ermittelt werden, je nach dem, ob zuletzt eine Zunahme des Stroms oder eine Abnahme des Stroms festgestellt wurde.

Beim erfindungsgemäßen Verfahren muss zu keinem Zeitpunkt die tatsächlich anodenseitig vorliegende Brennstoffkonzentration ermittelt werden. Es ist zur Durchführung des erfindungsgemäßen Verfahrens also weder ein Brennstoffkonzentrationssensor erforderlich (wie dies beispielsweise bei der WO02/49132 der Fall ist), noch ist ein Verfahren (mit zugehörigen Hard- und Softwarekomponenten) erforderlich, mit dessen Hilfe auf der Grundlage anderer Messgrößen die Berechnung der Brennstoffkonzentration durchgeführt wird (wie dies beispielsweise in der EP1321995 vorgeschlagen wird). Da die Brennstoffkonzentration weder gemessen noch berechnet werden muss, wird durch das erfindungsgemäße Verfahren eine beträchtliche Vereinfachung der Steuerung der Brennstoffzufuhr erreicht.

Der Schutzumfang der vorliegenden Erfindung wird durch die nachfolgenden Patentansprüche definiert.

## Patentansprüche

1. Verfahren zur Steuerung der Brennstoffzufuhr bei einem Brennstoffzellensystem mit einem Brennstoffzellenstack, umfassend:
Ermitteln eines ersten Eingangswertes durch Messen einer Kenngröße, die für den durch den Brennstoffzellenstack erzeugten elektrischen Strom repräsentativ ist,
Ermitteln eines Brennstoffzufuhrstellwerts in Abhängigkeit von dem ermittelten ersten Eingangswert durch eine vorab ermittelte Zuordnung zwischen der gemessenen Kenngröße und dem Brennstoffzufuhrstellwert, und
Zuführen von Brennstoff entsprechend dem ermittelten Brennstoffzufuhrstellwert;
(i) wobei vor dem Ermitteln des ersten Eingangswerts überprüft wird, ob eine Standzeit des Brennstoffzellenstacks vorliegt, und wenn dies der Fall ist:
ein Standzeitkorrekturwert in Abhängigkeit von der ermittelten Standzeit ermittelt wird, und
der Brennstoffzufuhrstellwert in Abhängigkeit von dem ermittelten ersten Eingangswert und dem Standzeitkorrekturwert ermittelt wird; oder
(ii) wobei vor dem Ermitteln des ersten Eingangswerts überprüft wird, ob ein Tankwechsel mit einer entsprechenden Zeitspanne, während der die Brennstoffzufuhr unterbrochen war, durchgeführt worden ist, und wenn dies der Fall ist:
ein Tankwechselkorrekturwert in Abhängigkeit von der ermittelten Zeitspanne ermittelt wird, und
der Brennstoffzufuhrstellwert in Abhängigkeit von dem ermittelten ersten Eingangswert und dem Tankwechselkorrekturwert ermittelt wird.

2. Verfahren nach Anspruch 1, wobei der Brennstoffzufuhrstellwert in Abhängigkeit von einem einzigen Eingangswert ermittelt wird.

3. Verfahren nach Anspruch 1, weiterhin umfassend:
Ermitteln eines zweiten Eingangswertes durch Messen einer zweiten Kenngröße des Brennstoffzellensystems, wobei die zweite Kenngröße des Brennstoffzellensystems eine Größe ist, die für die Temperatur des Brennstoffzellenstacks oder für die Temperatur des Anodenfluids des Brennstoffzellensystems repräsentativ ist,
Ermitteln des Brennstoffzufuhrstellwerts in Abhängigkeit von den beiden ermittelten Eingangswerten durch eine vorab ermittelte Zuordnung zwischen den zwei gemessenen Kenngrößen und dem Brennstoffzufuhrstellwert;
(i) wobei vor dem Ermitteln der beiden Eingangswerte überprüft wird, ob eine Standzeit des Brennstoffzellenstacks vorliegt, und wobei der Brennstoffzufuhrstellwert in Abhängigkeit von den ermittelten beiden Eingangswerten und dem Standzeitkorrekturwert ermittelt wird; oder
(ii) wobei vor dem Ermitteln der beiden Eingangswerte überprüft wird, ob ein Tankwechsel mit einer entsprechenden Zeitspanne, während der die Brennstoffzufuhr unterbrochen war, durchgeführt worden ist, und wobei der Brennstoffzufuhrstellwert in Abhängigkeit von den ermittelten beiden Eingangswerten und dem Tankwechselkorrekturwert ermittelt wird.

## Claims

1. Process for controlling the fuel supply in a fuel cell system having a fuel cell stack, comprising:
determining a first input value by measuring a parameter which is representative of the electric current produced by the fuel cell stack,
determining a fuel-supply adjustment value in response to the determined first input value through a previously determined assignment between the measured parameter and the fuel-supply adjustment value, and
supplying fuel in accordance with the determined fuel-supply adjustment value,
(i) wherein prior to the determination of the first input value it is checked whether there is a lifetime of the fuel cell stack and if this is the case:
a lifetime correction value is determined in response to the determined lifetime, and
the fuel-supply adjustment value is determined in response to the determined first input value and the lifetime correction value, or
(ii) wherein prior to the determination of the first input value it is checked whether a tank exchange has been carried out with a corresponding time span during which the fuel supply was interrupted, and if this is the case:
a tank-exchange correction value is determined in response to the determined time span, and
the fuel-supply adjustment value is determined in response to the determined first input value and the tank-exchange correction value.

2. Process according to claim 1, wherein the fuel-supply adjustment value is determined in response to a single input value.

3. Process according to claim 1, further comprising:
determining a second input value by measuring a second parameter of the fuel cell system, wherein the second parameter of the fuel cell system is a parameter that is representative of the temperature of the fuel cell stack or of the temperature of the anode fluid of the fuel cell system,
determining the fuel-supply adjustment value in response to the two determined input values through a previously determined assignment between the two measured parameters and the fuel-supply adjustment value,
(i) wherein prior to the determination of the two input values it is checked whether there is a lifetime of the fuel cell stack, and wherein the fuel-supply adjustment value is determined in response to the determined two input values and the lifetime correction value, or
(ii) wherein prior to the determination of the two input values it is checked whether a tank exchange has been carried out with a corresponding time span during which the fuel supply was interrupted, and wherein the fuel-supply adjustment value is determined in response to the determined two input values and the tank-exchange correction value.

## Revendications

1. Procédé pour commander l'alimentation en combustible dans un système de pile à combustible avec un groupement de cellules de pile à combustible, comprenant :
la détermination d'une première valeur d'entrée par mesure d'une grandeur caractéristique représentative du courant électrique produit par le groupement de cellules de pile à combustible,
la détermination d'une valeur de réglage d'alimentation de combustible en fonction de la première valeur d'entrée déterminée, par une association déterminée au préalable entre la grandeur caractéristique mesurée et la valeur de réglage d'alimentation de combustible, et l'alimentation en combustible conformément à la valeur de réglage d'alimentation de combustible ayant été déterminée ;
procédé
(i) d'après lequel avant la détermination de la première valeur d'entrée, on vérifie si l'on est en présence d'une indication de durée de vie du groupement de cellules de pile à combustible, et si cela est le cas :
on détermine une valeur de correction de durée de vie en fonction de la durée de vie ayant été déterminée, et
on détermine la valeur de réglage d'alimentation de combustible en fonction de la première valeur d'entrée ayant été déterminée et de la valeur de correction de durée de vie ; ou bien
(ii) d'après lequel avant la détermination de la première valeur d'entrée, on vérifie si un changement de réservoir, avec un intervalle de temps pendant lequel l'alimentation en combustible était interrompue, a été effectué, et si cela est le cas :
on détermine une valeur de correction de changement de réservoir en fonction de l'intervalle de temps ayant été déterminé, et
on détermine la valeur de réglage d'alimentation de combustible en fonction de la première valeur d'entrée ayant été déterminée et de la valeur de correction de changement de réservoir.

2. Procédé selon la revendication 1, d'après lequel la valeur de réglage d'alimentation de combustible est déterminée à partir d'une seule valeur d'entrée.

3. Procédé selon la revendication 1, comprenant en outre :
la détermination d'une deuxième valeur d'entrée par mesure d'une deuxième grandeur caractéristique du système de pile à combustible, la deuxième grandeur caractéristique du système de pile à combustible étant une grandeur représentative de la température du groupement de cellules de pile à combustible ou de la température du fluide d'anode du système de pile à combustible,
la détermination de la valeur de réglage d'alimentation de combustible en fonction des deux valeurs d'entrée déterminées, par une association déterminée au préalable entre les deux grandeurs caractéristiques mesurées et la valeur de réglage d'alimentation de combustible ;
procédé
(i) d'après lequel avant la détermination des deux premières valeurs d'entrée, on vérifie si l'on est en présence d'une indication de durée de vie du groupement de cellules de pile à combustible, et d'après lequel on détermine la valeur de réglage d'alimentation de combustible en fonction des deux valeurs d'entrée ayant été déterminées et de la valeur de correction de durée de vie ; ou bien
(ii) d'après lequel avant la détermination des deux premières valeurs d'entrée, on vérifie si un changement de réservoir, avec un intervalle de temps pendant lequel l'alimentation en combustible était interrompue, a été effectué, et d'après lequel on détermine la valeur de réglage d'alimentation de combustible en fonction des deux valeurs d'entrée ayant été déterminées et de la valeur de correction de changement de réservoir.
